# EUROPEAN PATENT SPECIFICATION

(11) **EP 2 679 298 B1**
(45) Date of publication and mention of the grant of the patent: **11.07.2018**
(21) Application number: 12748967.2
(22) Date of filing: 08.02.2012
(51) Int. Cl.: B01D 71/36, B01D 69/10, B01D 69/12, B32B 27/30, C08J 9/00

(54) **POROUS MULTI-LAYER FILTER**
PORÖSER MEHRSCHICHTIGER FILTER
FILTRE MULTICOUCHE POREUX

(30) Priority: 25.02.2011 JP 2011040642
(43) Date of publication of application: 01.01.2014
(73) Proprietor: Sumitomo Electric Fine Polymer, Inc., Sennan-gun, Osaka 590-0458 (JP)
(72) Inventor: TSUJIWAKI, Hiroyuki, Sennan-gun Osaka 590-0458 (JP); UNO, Atsushi, Sennan-gun Osaka 590-0458 (JP); FUNATSU, Hajime, Sennan-gun Osaka 590-0458 (JP)
(74) Representative: Boult Wade Tennant
(86) International application number: PCT/JP2012/052821
(87) International publication number: WO 2012/114868

(56) References cited:
- EP-A1- 1 386 651
- EP-A2- 2 033 704
- WO-A1-2010/092938
- JP-A- 2007 154 153
- JP-A- 2008 272 692
- JP-A- 2008 525 233
- JP-A- 2010 214 298
- US-A- 5 225 131

## Description

### Technical Field

The present invention relates to a porous multi-layer filter, and more particularly, relates to a filter for microfiltration capable of filtering ultrafine particles at a high flow rate, in which protection of the filtration surface is achieved.

### Background Art

Polytetrafluoroethylene (hereinafter, referred to as "PTFE") porous filters have characteristics inherent in PTFE, such as high heat resistance, chemical stability, weatherability, noncombustibility, high strength, non-adhesiveness, and a low coefficient of friction, as well as characteristics possessed by porous bodies, such as flexibility, liquid permeability, particle collection efficiency, and a low dielectric constant. Because of their excellent characteristics, such as high chemical stability, the PTFE porous filters have been widely used, in particular, as filters for microfiltration (membrane filters) of liquids, gases, and the like in the semiconductor-related field, liquid crystal-related field, and food/medicine-related field.

In such fields, in view of further technological innovation and increasing requirements, there have been demands for filters for microfiltration having higher performance. Specifically, in semiconductor manufacturing, the degree of integration is increasing year by year, and there are photoresists that are used for microfabrication in regions having a pattern line width of 0.5 µm or less. Similarly, in liquid crystal manufacturing, microfabrication using photosensitive materials is performed, and therefore, there is a need for filters for microfiltration which can reliably retain fine particles in smaller regions. These filters for microfiltration are mainly used as filters for treating air in clean rooms and as filters for filtration of chemical solutions, and their performance affects the yield of products.

Furthermore, in the food/medicine-related field, along with recent increases in safety awareness, there have been strong demands for completeness of filtration (absolute removability) for very small pieces of foreign matter.

Accordingly, for example, Japanese Unexamined Patent Application Publication No. 2010-94579 (PTL 1) proposes a filter for filtration formed of a laminated body of two layers, in which a filtration membrane composed of a PTFE porous membrane having a thickness of 50 µm or less and capable of retaining fine particles with a size of less than 0.1 µm is fixed on a support.

However, when it is intended to ensure particle retention efficiency for fine particles, the pore size of a filtration layer is decreased. When the surface of the filtration layer is exposed to the outside, damage is likely to occur on the surface of the filtration layer having a microstructure during production, during processing, or during use. When damage occurs on the surface of the filtration layer, fine particle retention capability is decreased, which is a problem. JP2007-154153 A, US5,225,131 A and EP 2 033 704 A2 disclose laminates of three porous PTFE layers with the selective membrane sandwiched between protective layers. WO 2010/092938 A1 discloses a two-layer laminate using PTFE of high molecular weight. There is a need to increase strength of the laminates.

### Citation List

### Patent Literature

PTL 1: Japanese Unexamined Patent Application Publication No. 2010-94579

### Summary of Invention

### Technical Problem

It is an object of the present invention to provide a filter in which the retention capability and treatment rate for ultrafine particles of less than 0.1 µm are not decreased, and damage is unlikely to occur on a filtration layer.

### Solution to Problem

In order to overcome the problem described above, the present invention provides a porous multi-layer according to claim 1.

In the laminated body of three sheets, the difference between the tensile strength in the longitudinal direction and the tensile strength in the transverse direction is set at 1,500 mN or less; each of the tensile strength in the longitudinal direction and the tensile strength in the transverse direction is set in the range of 2,000 to 20,000 mN, preferably in the range of 4,000 to 13,000 mN; and the pressure capacity of the laminated body may be set in the range of 200 to 2,000 kPa, preferably 500 to 1,500 kPa.

The three sheets to be stacked are each a sheet biaxially stretched in the longitudinal and transverse directions, in which the difference between the strength in the longitudinal direction and the strength in the transverse direction is decreased. Therefore, the filter of the present invention formed of the laminated body is imparted with isotropic tensile strength, and deformation is unlikely to occur.

As described above, by stacking the protection layer on the liquid-to-be-treated inflow side of the filtration layer, the surface of the filtration layer is protected so as not to be exposed to the outside. Since the pores of the protection layer are set to be larger than the pores of the filtration layer, the treatment rate is prevented from being decreased, and high flow rate treatment is made possible.

Moreover, the protection layer, the filtration layer, and the support layer are each biaxially stretched in the longitudinal and transverse directions, in which the strength in the longitudinal direction and the strength in the transverse direction are set to be substantially the same so as to increase the strength of each layer and to impart isotropy. Furthermore, since the three layers are formed of porous stretched PTFE sheets having strength, which are of the same quality, peeling is unlikely to occur at fused interfaces, thus increasing fixing strength. In such a manner, by sandwiching the filtration layer between the protection layer and the support layer, each having strength, strong integration is achieved, thus enhancing filtration layer protection capability.

In the present invention, the mean pore size of the filtration layer is 0.01 to 0.45 µm, the mean pore size of each of the protection layer and the support layer on both sides is 5 to 1,000 times the mean pore size of the filtration layer, and the thickness of the filtration layer is 2 to 50 µm.

The size of retained particles depends on the pores of the filtration layer. When the mean pore size is set at 0.01 to 0.45 µm, preferably less than 0.1 µm, ultrafine particles of less than 0.1 µm can be retained. Moreover, by setting the thickness to be small at 2 to 50 µm, the flow rate can be increased. Even when the thickness of the filtration layer is decreased as described above, since the filtration layer is sandwiched between the protection layer and the support layer on both sides, it is possible to prevent occurrence of damage to the filtration layer and occurrence of deformation, such as shrinkage, during production, during processing, or during treatment.

The mean pore size of each of the filtration layer, the protection layer, the support layer was measured using a pore diameter distribution measuring apparatus Perm-Porometer (manufactured by PMI Corp., U.S.A; model No. CFP-1200A). GALWICK (PMI Corp.) was used as a liquid for measurement.

In the measurement using the Perm-Porometer, an air pressure was gradually applied to a die-cut sample (25 mm in diameter; measurement area: about 16 mm in diameter) that had been immersed in the liquid for measurement, and the air flow rate in the wet state and the air flow rate in the dry state were measured. The maximum, minimum, and mean pore sizes were checked. The pore size distribution was calculated from the ratio between the air flow rate during the dry state and the air flow rate during the wet state.

In a conventional filter of this kind, the minimum particle size that can be retained is 0.1 µm. In contrast, in the present invention, as described above, the mean pore size of the filtration layer is set at 0.01 to 0.45 µm, and particles of less than 0.1 µm can be retained. Furthermore, in this case, the flow rate of permeation is set so as to achieve a high flow rate equivalent to the flow rate of permeation of the conventional filter which retains particles of 0.1 µm.

The particle retention rate is measured by the method described below.

A filter is punched to a circle with a diameter of 47 mm and set into a holder. An aqueous solution containing polystyrene latex homogeneous particles (manufactured by JSR Corporation) having a particle diameter of 0.055 µm (1.4 × 10¹⁰ pieces/cm³) is prepared, and 32 cm³ of the aqueous solution is filtered using the filter which has been set, at a pressure of 41.2 kPa. The absorbance is measured for the aqueous solution before filtration and the filtrate, and the ratio between the two is calculated. The absorbance is measured using an ultraviolet-visible spectrophotometer (manufactured by Shimadzu Corporation, UV-160) at a wavelength of 310 nm (measurement accuracy 1/100).

The sheet thickness of the filtration layer is set in the range of 2 to 50 µm, and the thickness of the protection and the support layer is set in the range of 5 to 60 µm, which is slightly larger than that of the filtration layer, and the total thickness of the laminated body is 10 to 150 µm.

The porous stretched PTFE sheet used as the filtration layer can be changed according to the size of target particles to be retained, and the protection layer and the support layer to be integrated with the filtration layer can be used in common by setting the mean pore size in the range of 5 to 1,000 times, as described above, preferably 10 to 30 times.

The porosity of the filtration layer is 40% to 90%, and the porosity of each of the protection layer and the support layer is 1 to 2.5 times that of the filtration layer.

The reason for this is that when the porosity of the filtration layer is less than 40%, the flow rate may decrease excessively, and when the porosity exceeds 90%, the strength may decrease excessively.

The porosity is determined according to the method described in ASTM-D-792 or by calculation based on the volume and absolute specific gravity of the membrane. A higher porosity value indicates superior permeability.

Furthermore, in the filtration layer, the bubble point is set at 70 to 550 kPa, preferably 200 to 500 kPa.

A method of manufacturing a porous multi-layer filter formed of a laminated body of three sheets according to the present invention include preparing three porous stretched PTFE sheets, serving as the protection layer, the filtration layer, and the support layer, that have been biaxially stretched, stacking the three sheets, and performing sintering at a temperature equal to or higher than the melting point of PTFE to fusion-bond the protection layer to one surface of the filtration layer and the support layer to another surface of the filtration layer at interfaces therebetween, thereby forming an integrated structure.

Instead of performing fusion-bonding at the interfaces by sintering after the three sheets have been stacked as described above, a method may be used in which one of the protection layer and the support layer is stacked on the filtration layer, then fusion-bonding at the interface is performed by sintering, subsequently, the other one of the protection layer and the support layer is stacked on another surface of the filtration layer, and then fusion-bonding at the interface is performed by sintering.

Furthermore, the surface of the laminated body may be hydrophilized by impregnating the integrated laminated body with a hydrophilic material, and then, insolubilizing the hydrophilic material by treatment with a crosslinking liquid.

Examples of the hydrophilic material used in the hydrophilization include polyvinyl alcohol (PVA), ethylene-vinyl alcohol copolymers (EVOH), and acrylate resins. Above all, when a PTFE porous body is impregnated with an aqueous solution of PVA, PVA easily adsorbs to the surface of PTFE fibers and is easily uniformly applied to fibers, and thus PVA is suitably used.

The porous stretched PTFE sheets to constitute the filtration layer, the protection layer, and the support layer are produced by the method described below. Note that when the protection layer and the support layer are formed of the same porous stretched PTFE sheet, the production cost can be reduced.

The method includes a step of forming sheets by subjecting a mixture of high-molecular-weight PTFE unsintered powder and a liquid lubricant to paste extrusion, a step of biaxially stretching the sheets in the longitudinal and transverse directions to form porous films, and a step of sintering each of the stretched porous films.

In each of the filtration layer, the support layer, and the protection layer, the stretch magnifications in the longitudinal and transverse directions are set to be relatively high. The stretch magnification in the longitudinal direction is 3 to 15 times, and preferably 3 to 6 times, and the stretch magnification in the transverse direction is 10 to 50 times, and preferably 15 to 25 times. When the stretch magnifications are smaller than the magnifications described above, the porosity decreases, lumps of resin remain, the shape of pores does not become spherical, and it is not possible to obtain sufficient permeability. On the other hand, when the stretch magnifications exceed the magnifications described above, there may be a possibility that fibers are torn, leading to large pores.

As described above, by using high-molecular-weight PTFE unsintered powder and by increasing the stretch magnifications in the biaxial directions, i.e., in the longitudinal and transverse directions, it is possible to obtain a porous filter in which the filtration layer has high permeability while having fine pores.

The reason for this is that, when high-molecular-weight PTFE unsintered powder is used, even if stretching is performed in the biaxial directions, i.e., in the longitudinal and transverse directions, at higher magnifications than those in the conventional case, while preventing a pore from excessively expanding or the film from being torn, fiber formation is allowed to proceed to a high degree, resulting in substantial disappearance of nodes which are PTFE lumps, and it is possible to fabricate a porous filter in which fine pores with fine fibers constituting the skeleton are densely disposed.

As the high-molecular-weight PTFE unsintered powder for forming the filtration layer, specifically, powder having a number-average molecular weight of 4,000,000 to 15,000,000 is used. Preferably the number-average molecular weight is 12,000,000 or higher. This corresponds to the particularly high grade of molecular weight among currently commercially available PTFE unsintered powder.

The number-average molecular weight is determined from the specific gravity of the shaped article. However, the PTFE molecular weight largely varies depending on the measurement method, which makes it difficult to perform accurate measurement. Therefore, depending on the measurement method, the range described above may not be satisfied.

The support layer and the protection layer can be formed with a wide range.

Furthermore, in the filtration layer, the stretch magnification in terms of area ratio is preferably 12 to 150 times. When the stretch magnification in terms of area ratio is less than 12 times, fiber formation cannot be allowed to proceed to a high degree. On the other hand, when the stretch magnification exceeds 150 times, the film becomes too thin, resulting in a decrease in strength.

In the support layer and the protection layer, the stretch magnification in terms of area ratio is also preferably 12 to 150 times.

When the stretch magnification in terms of area ratio is less than 12 times, fiber formation cannot be allowed to proceed to a high degree. On the other hand, when the stretch magnification exceeds 150 times, residual stress becomes too strong, and the function of the support film is decreased.

### Advantageous Effects of Invention

As is obvious from the above description, since a porous multi-layer filter of the present invention is a laminated body of three layers in which a protection layer is stacked on one surface of a filtration layer on the liquid-to-be-treated inflow side, a support layer is stacked on another surface of the filtration layer, and the filtration layer is sandwiched between the protection layer and the support layer, the filtration layer is protected during production, during processing, or during use, and it is possible to prevent a decrease in the filtration performance caused by damage to the filtration layer.

Moreover, since the pores of each of the protection layer and the support layer are set to be larger than the pores of the filtration layer, the permeability for the liquid to be treated is not impaired. Moreover, since the strength of the filtration layer is increased by fusion-bonding the protection layer and the support layer to both surfaces of the filtration layer, the flow rate of permeation can be increased while decreasing the thickness of the filtration layer.

In such a manner, in the filters of the present invention, while being capable of retaining ultrafine particles, stable permeability can be secured and permeation can be performed at a high flow rate.

Therefore, the filters can be suitably used as gas/liquid filters for microfiltration, in particular, used in manufacturing processes in the semiconductor and liquid crystal fields and food/medicine field, in which a higher retention rate of ultrafine particles and a high treatment rate are required.

### Brief Description of Drawings

[Fig. 1A] Figure 1A is a schematic side view of a porous multi-layer filter according to the present invention.
[Fig. 1B] Figure 1B is a schematic enlarged cross-sectional view of a porous multi-layer filter according to the present invention.
[Fig. 2] Figure 2 is a schematic side view according to a comparative example.
[Fig. 3] Figure 3 is a graph showing a relationship between the IPA flow rate and the BP in examples and comparative examples.

### Description of Embodiments

The embodiments of the present invention will be described below with reference to the drawings.

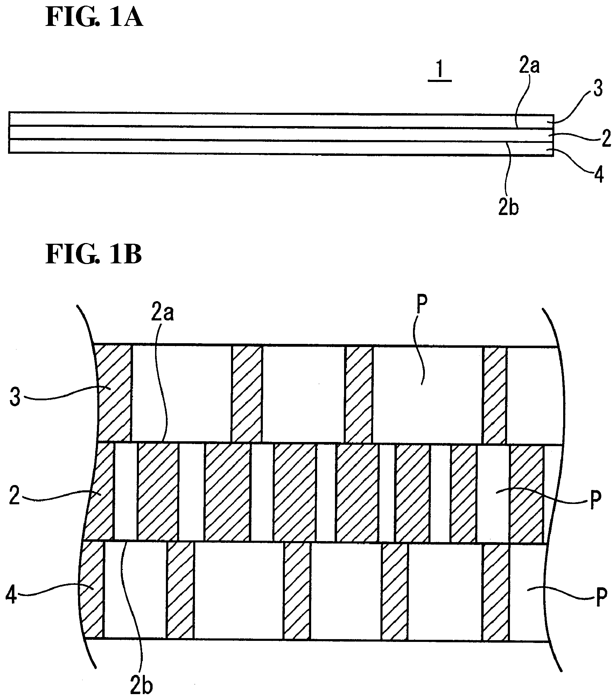

As shown in Figs. 1A and 1B, a porous multi-layer filter 1 of the present invention is formed of a laminated body of three layers including a filtration layer 2, a protection layer 3 stacked on one surface of the filtration layer 2 on the liquid-to-be-treated inflow side, and a support layer 4 stacked on another surface of the filtration layer 2. The filtration layer 2, the protection layer 3, and the support layer 4 are each composed of a porous stretched PTFE sheet that has been biaxially stretched in the longitudinal and transverse directions.

The protection layer 3 is fusion-bonded to a surface 2a of the filtration layer 2 at an interface therebetween, and another surface 2b of the filtration layer 2 is fusion-bonded to the support layer 4 at an interface therebetween, thus forming an integrated structure.

The filtration layer 2, the protection layer 3, and the support layer 4 each have a thickness in the range of 2 to 50 µm, and in this embodiment, the three layers have the same thickness of about 10 µm.

Each of the filtration layer 2, the protection layer 3, and the support layer 4 has a fibril skeleton in which flexible fibers are linked together by nodes to form a three-dimensional network. The fibril skeleton surrounds substantially slit-shaped pores P, and the pores P of the three layers three-dimensionally communicate with each other in the stacked state.

In the filtration layer 2, the mean pore size is 0.03 to 0.20 µm, and the bubble point is set by adjusting the mean pore size and the porosity within the ranges described above depending on solid particles to be retained.

In this embodiment, ultrafine particles of less than 0.05 µm are aimed to be retained, and the mean pore size of the filtration layer 2 is set at 0.03 µm. The bubble point is set at 200 to 500 kPa, and the IPA flow rate is set at 70 to 300 sec/100 ml.

The protection layer 3 and the support layer 4 are formed using the same porous stretched PTFE sheet.

The mean pore size of each of the protection layer 3 and the support layer 4 is 5 to 1,000 times the mean pore size of the filtration layer 2. In this embodiment, the mean pore size of each of the protection layer 3 and the support layer 4 is about 0.45 µm corresponding to 15 times the mean pore size of the filtration layer 2 of 0.03 µm.

Furthermore, in each of the protection layer 3 and the support layer 4, the porosity is set at 60% to 90% and the bubble point is set at 2 to 110 kPa.

The porous stretched PTFE sheets constituting the protection layer 3, the filtration layer 2, and the support layer 4 are each a sheet biaxially stretched in the longitudinal and transverse directions such that the tensile strength in the longitudinal direction and the tensile strength in the transverse direction are equal to each other as much as possible within a set value, and isotropic strength is exhibited.

Accordingly, in the porous multi-layer filter 1 in which three layers including the protection layer 3, the filtration layer 2, and the support layer 4 are stacked and integrated, the difference between the tensile strength in the longitudinal direction and the tensile strength in the transverse direction is set at 1,500 mN or less and is decreased as much as possible, so that isotropic strength can be exhibited. In the porous multi-layer filter 1 which is a laminated body of the three layers, each of the tensile strength in the longitudinal direction and the tensile strength in the transverse direction is set in the range of 4,000 to 13,000 mN.

The tensile strength in the longitudinal strength and the tensile strength in the transverse direction are measured by die-cutting the stacked and integrated sheets into a sample with a sheet width of 5 mm, and carrying out a tensile test at a chuck interval of 30 mm and a test speed of 100 mm/min.

Furthermore, in the porous multi-layer filter 1 in which three layers including the protection layer 3, the filtration layer 2, and the support layer 4 are stacked and integrated, the pressure capacity is set at 200 to 2,000 kPa.

The physical properties described above are measured by the methods described below.
(1) Porosity: According to ASTM-D-792, calculated from specific gravity measured in water (apparent specific gravity) and specific gravity of tetrafluoroethylene resin. A higher value indicates superior permeability.
(2) Mean pore size: Measured with a Perm-Porometer manufactured by PMI Corp. (model No. CFP-1200A).
(3) Bubble point: Measured by a method according to ASTM-F-316-80, using isopropyl alcohol.
(4) Tensile strength in longitudinal and transverse directions: Measured by die-cutting the stacked and integrated sheets into a sample with a sheet width of 5 mm, and pulling the sample at a chuck interval of 30 mm and a test speed of 100 mm/min.
(5) Pressure capacity: Pores are blocked with rubber having a strength that is much lower than that of the PTFE porous sheets, air pressure is gradually applied to an area with a diameter of 3 mm, and pressure is measured at the time when air is allowed to pass through owing to breakage of the membrane or the like.

A method of manufacturing the porous multi-layer filter 1 will be described below.

In a first step, porous stretched PTFE sheets to constitute the filtration layer 2, the protection layer 3, and the support layer 4 are produced separately.

Since the protection layer 3 and the support layer 4 are formed using the same sheet, two types of porous stretched PTFE sheet, i.e., a sheet for forming the filtration layer 2 and a sheet for forming the protection layer 3 and the support layer 4 are produced.

In the first step, a shaped body is produced by known paste extrusion of PTFE unsintered powder.

In the paste extrusion process, usually, 10 to 40 parts by mass, preferably 16 to 25 parts by mass, of a liquid lubricant is mixed to 100 parts by mass of PTFE unsintered powder, and extrusion is performed.

As the PTFE unsintered powder, high-molecular-weight powder having a number-average molecular weight of 4,000,000 to 15,000,000 is used.

As the liquid lubricant, various lubricants which have been conventionally used in the paste extrusion process can be used. Examples thereof include petroleum solvents, such as solvent naphtha and white oil; hydrocarbon oil, such as undecane; aromatic hydrocarbons, such as triol and xylol; alcohols; ketones; esters; silicone oil; fluorochlorocarbon oil; solutions obtained by dissolving a polymer, such as polyisobutylene or polyisoprene, in these solvents; mixtures containing at least two of these; and water or aqueous solutions containing a surfactant. A single component is preferable to a mixture because uniform mixing can be achieved.

Next, the resulting mixture is subjected to compression molding using a compression molding machine to form a block-like shaped body (preforming). The block-like shaped body is extruded into a sheet-like shape at room temperature to 50°C, at a rate of 20 mm/min.

Then, the resulting sheet-like shaped body is calendered with calender rollers or the like to produce a sheet-like shaped body with a thickness of 300 µm.

Next, the liquid lubricant is removed from the shaped body. The liquid lubricant is removed before sintering. The liquid lubricant may be removed after stretching, but preferably removed before stretching.

The liquid lubricant is removed by heating, extraction, dissolution, or the like, and preferably by heating. In the case of heating, the shaped body is passed through heating rollers at a roll temperature of 130°C to 220°C. In the case where a liquid lubricant having a relatively high boiling point, such as silicone oil or a fluorocarbon, is used, the liquid lubricant is preferably removed by extraction.

Furthermore, in addition to the liquid lubricant, other substances may also be incorporated in any purpose.

For example, pigments for coloring may be added, and for the purpose of improving wear resistance, preventing cold flow, and facilitating the formation of pores, and for other purposes, inorganic fillers, such as carbon black, graphite, silica powder, glass powder, glass fibers, silicates, and carbonates; metal powder, metal oxide powder, metal sulfide powder, and the like can be added. Furthermore, for the purpose of promoting the formation of a porous structure, substances that can be removed or decomposed by heating, extraction, dissolution, or the like, such as ammonium chloride, sodium chloride, and other plastics and rubbers, may be added in the form of a powder or solution.

In the subsequent step, the shaped body obtained by paste extrusion is biaxially stretched in the longitudinal and transverse directions.

In the stretching process, the stretch magnification of the sheet-like shaped body for the filtration layer 2 is set different from that of each of the sheet-like shaped bodies for the protection layer 3 and the support layer 4 so that the stretched sheet-like shaped bodies can have different mean pore sizes.

In this embodiment, in each of the sheet-like shaped bodies for the filtration layer 2, the protection layer 3, and the support layer 4, longitudinal stretching is carried out once or twice first, and then transverse stretching is carried out.

Stretching is preferably performed at a temperature that is lower than the melting point and as high as possible. The temperature is preferably room temperature (or 20°C) to 300°C, and more preferably 250°C to 280°C.

When stretching is performed at a low temperature, a porous membrane having a relatively large pore size and a high porosity is easily produced. When stretching is performed at a high temperature, a dense porous membrane having a small pore size is easily produced.

By combining these conditions, it is possible to control the pore size and the porosity. In the filtration layer, since a dense porous membrane having a small pore size is desired, a relatively high stretching temperature is preferably used.

In the stretching process, preferably, after first stage longitudinal stretching is performed at a low temperature of 20°C to 70°C, second stage longitudinal stretching is performed under the high temperature condition as described above.

Transverse stretching is preferably performed under the high temperature condition at 70°C to 200°C.

Furthermore, in order to prevent shrinkage of the stretched sheet, preferably, heat setting is performed.

In the present invention, since the stretch magnification is particularly increased, heat setting is important in order not to lose the porous structure. Heat setting is preferably performed immediately after the stretching in the transverse direction is performed. In the case where stretching is performed in two or more stages, heat setting is preferably performed after stretching in each stage.

Heat setting is usually performed under tension, for example, with both ends of the stretched film fixed, at an atmospheric temperature of 200°C to 500°C while retaining for 0.1 to 20 minutes.

In the filtration layer 2, the stretch magnification is set according to the mean pore size of pores to be formed as shown in Table I below.

**[Table I]**

| Mean pore size (µm) First longitudinal (times) Second longitudinal (times) Transverse (times) | | | |
|---|---|---|---|
| 0.03 | 2 | 2 | 15.4 |
| 0.05 | 2 | 3 | 21.5 |
| 0.10 | 2 | 3 | 21.5 |
| 0.20 | 3.5 | | 21.5 |

When the mean pore size is 0.20 µm, longitudinal stretching is performed only once.

Furthermore, in the filtration layer, the maximum and minimum of the stretch magnifications in the longitudinal and transverse directions and the area stretch magnification are set as shown in Table II.

**[Table II]**

| (Total stretch magnification) | | | |
|---|---|---|---|
| | Longitudinal (times) | Transverse (times) | Area (times) |
| Maximum | 6 | 21.5 | 129 |
| Minimum | 4 | 15.4 | 61.6 |

The mean pore size of pores formed in each of the protection layer 3 and the support layer 4 is set at 5 to 1,000 times the mean pore size of pores of the filtration layer 2. By adjusting in advance the grade of the resin for forming the protection layer 3 and the support layer 4 and the number of parts of a liquid lubricant to be mixed, the pore size is increased while maintaining the same stretch magnifications in the biaxial directions, i.e., in the longitudinal and transverse directions as those shown in Table II.

As described above, the stretched sheet for the protection layer 3 and the stretched sheet for the support layer 4 are stacked on the biaxially stretched sheet for the filtration layer 2 so as to sandwich the filtration layer 2, thereby forming an integrated structure.

The integration process is performed at a sintering temperature of 327°C, which is the transition point of PTFE, or higher by heating for about several minutes to several tens of minutes, or for a longer period than that depending on circumstances. Usually, heating is performed at 360°C to 400°C for 0.5 to 3 minutes.

In such a manner, the protection layer 3 is fusion-bonded to a surface 2a of the filtration layer 2 at an interface therebetween, and another surface 2b of the filtration layer 2 is fusion-bonded to the support layer 4 at an interface therebetween, thus forming an integrated structure. Thereby, a porous multi-layer filter 1 is produced.

In this embodiment, the porous multi-layer filter 1 obtained in the step described above is not subjected to hydrophilization treatment. The reason for this is that the protection layer 3 is stacked on the liquid-to-be-treated inflow side surface of the filtration layer 2, and by increasing the mean pore size of the protection layer 3, a liquid to be treated relatively easily flows into the pores of the protection layer 3.

Furthermore, the stacked and integrated porous stretched PTFE sheets may be subjected to hydrophilization treatment with PVA. In the hydrophilization treatment, the stacked and integrated porous stretched PTFE sheets are immersed in isopropyl alcohol (IPA) for 0.25 to 2 minutes, and then immersed in an aqueous solution of PVA with a concentration of 0.5% to 0.8% by weight for 5 to 10 minutes. Then, after immersion in pure water for 2 to 5 minutes, crosslinking is performed. The crosslinking is performed by any method selected from glutaraldehyde crosslinking (GA), terephthalaldehyde crosslinking (TPA) and radiation beam crosslinking in which electron beam irradiation is performed at 6 Mrad.

After the crosslinking is performed, the stacked and integrated porous stretched PTFE sheets are washed with pure water and then dried at normal temperature to 80°C to obtain stacked and integrated hydrophilic PTFE porous membranes.

The porous multi-layer filter 1 fabricated by the method described above has a structure in which the support layer 4, the filtration layer 2, and the protection layer 3, each being composed of a porous stretched PTFE sheet, are sacked and integrated, as shown in Fig. 1, and pores of the stacked three layers three-dimensionally communicate with each other.

In the porous multi-layer filter 1, a liquid to be treated is supplied from the outer surface of the protection layer 3 toward the filtration layer 2 and the support layer 4 to perform solid-liquid separation treatment.

In the porous multi-layer filter 1, since the protection layer 3 and the support layer 4 are stacked on both surfaces of the filtration layer 2 so as to sandwich the filtration layer 2, it is possible to protect the filtration layer 2 from an external friction material. As a result, the filtration layer 2 provided with fine pores can be prevented from being damaged, and the microfiltration performance can be maintained.

In particular, each of the protection layer 3 and the support layer 4, which protects or supports the filtration layer 2, is biaxially stretched, and the tensile strength imparted in the longitudinal direction and the tensile strength imparted in the transverse direction are set to be equal to each other, thus increasing strength compared with a uniaxially stretched material. Therefore, the strength of the porous multi-layer filter 1 as a whole is also increased, and durability can be obtained.

Furthermore, since the protection layer 3 and the support layer 4 to be arranged on both surfaces of the filtration layer 2 are formed using the same porous sheet, cost increases can be suppressed.

Furthermore, since the pores of the protection layer 3 to be stacked on the liquid-to-be-treated inflow side of the filtration layer 2 is set to be larger than the pores of the filtration layer, microfiltration can be performed without decreasing the treatment rate.

### EXAMPLES

Examples of a laminate of three layers according to the present invention, which were composed of biaxially stretched sheets, were fabricated.

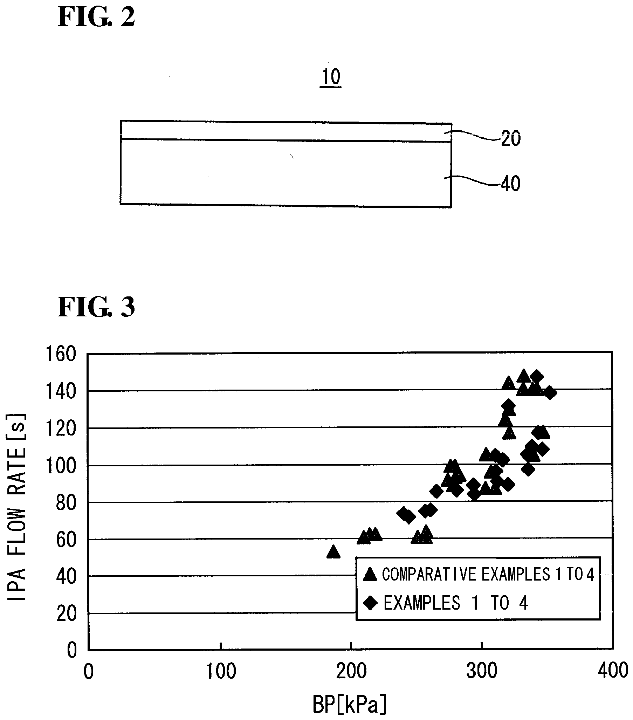

A filter material 10 according to a comparative example was, as shown in Fig. 2, a laminate of two layers in which a support layer 40 only was stacked on a filtration layer 20, and the support layer 40 was uniaxially stretched in the longitudinal direction. Such comparative examples were fabricated, and the tensile strength in the longitudinal direction and the tensile strength in the transverse direction were measured.

Furthermore, regarding the three-layer membrane of Example 1 and the two-layer membrane of Comparative Example 1, the flow rate of a liquid to be treated (IPA flow rate) was measured. In the measurement of the IPA flow rate, the time required for 100 ml of IPA (isopropyl alcohol) to be filtered under a reduced pressure of 98 kPa was measured (effective membrane area: 9.6 cm²).

### (Example 1)

18 Parts by mass of a liquid lubricant (Supersol FP-25 manufactured by Idemitsu Petroleum Co., Ltd. (constituent: naphtha)) was added and mixed to 100 parts by mass of PTFE fine powder (PTFE 601A manufactured by DuPont). The resulting mixture was subjected to compression molding in a molding machine to form a block-like shaped body.

Next, the block-like shaped body was continuously extruded into a sheet-like shape. The sheet-like shaped body was passed through calender rollers, further passed through heating rollers (130°C to 220°C) in order to remove the liquid lubricant, and wound up on a roll to obtain a sheet of 300 µm to be used as a sheet for forming a filtration layer. Furthermore, a sheet of 250 µm was obtained as a sheet for forming a support layer and a protection layer.

Next, with respect to a sheet for forming the filtration layer, after stretching at a magnification of 2 times in the longitudinal direction (machine direction) at a roll temperature of 250°C to 280°C, stretching is further performed at a magnification of 2 times under the same temperature condition. That is, longitudinal stretching was performed in two stages at a stretch magnification of 4 times.

Both ends in the width direction of the longitudinally stretched film were held with a chuck, and transverse stretching was performed in a direction perpendicular to the machine direction in an atmosphere of 50°C at a stretch magnification of 15.4 times. Then, the stretched film was directly subjected to heat setting by being retained at 285°C for 0.25 to 1 minute.

The stretched sheet was passed through a heating furnace of 360°C to perform sintering for 1.5 minutes. Thereby, a sheet for the filtration layer of Example 1 was obtained. The resulting sheet for the filtration layer had a thickness of 10µm, a bubble point of 350 kPa, and a mean pore size of 0.03 µm.

On the other hand, a sheet for forming the support layer 4 and the protection layer 3 was formed under a temperature condition of 180°C to 200°C, at a longitudinal stretch magnification of 3.5 times, and at a transverse stretch magnification of 21.5 times. The pore size of each of the support layer 4 and the protection layer 3 was 6 times that of the filtration layer 2, and the thickness of each of the support layer 4 and the protection layer 3 was 10 µm.

The porous stretched PTFE sheets for the filtration layer 2, the support layer 4, and the protection layer 3 were stacked, and by heating at 370°C for 100 seconds, the individual layers were fusion-bonded to each other at boundaries therebetween to form an integrated structure.

### (Example 2)

In order to set the mean pore size of pores of a filtration layer 2 to be 0.05 µm, the stretch magnifications in the longitudinal and transverse directions of a sheet for forming the filtration layer were set such that the first longitudinal magnification was 2 times, the second longitudinal magnification was 3 times, and the transverse magnification was 21.5 times, as shown in Table I. Thereafter, the same procedure as that in Example 1 was performed.

### (Example 3)

In order to set the mean pore size of pores of a filtration layer 2 to be 0.10 µm, the stretch magnifications in the longitudinal and transverse directions of a sheet for forming the filtration layer were set such that the first longitudinal magnification was 2 times, the second longitudinal magnification was 3 times, and the transverse magnification was 21.5 times, as shown in Table I. Thereafter, the same procedure as that in Example 1 was performed.

### (Example 4)

In order to set the mean pore size of pores of a filtration layer 2 to be 0.20 µm, the stretch magnifications in the longitudinal and transverse directions of a sheet for forming the filtration layer were set such that the longitudinal magnification was 3.5 times, and the transverse magnification was 21.5 times, as shown in Table I. Thereafter, the same procedure as that in Example 1 was performed.

### (Comparative Example 1)

A filter material 10 of Comparative Example 1 was fabricated so as to have a two-layer structure in which a support layer 40 was stacked on a filtration layer 20 as described above. The filtration layer 20 was formed as in the filtration layer 2 of Example 1, and pores with a mean pore size of 0.03 µm were provided, and the thickness was set at 10 µm.

On the other hand, a sheet for forming the support layer 40 was formed under a temperature condition of 180°C to 200°C and at a longitudinal stretch magnification of 18.5 times, and the thickness was set at 30 µm.

The porous stretched PTFE sheets for the filtration layer 20 and the support layer 40 were stacked, and by heating at 370°C for 100 seconds, the filtration layer 20 and the support layer 40 were fusion-bonded to each other at a boundary therebetween to form an integrated structure.

### (Comparative Example 2)

The mean pore size of a filtration layer was set at 0.05 µm. Other than this, the same procedure as that in Comparative Example 1 was performed.

### (Comparative Example 3)

The mean pore size of a filtration layer was set at 0.10 µm. Other than this, the same procedure as that in Comparative Example 1 was performed.

### (Comparative Example 4)

The mean pore size of a filtration layer was set at 0.20 µm. Other than this, the same procedure as that in Comparative Example 1 was performed.

Regarding the filters formed of three-layer laminated bodies of Examples 1 to 4 and filters formed of two-layer laminated bodies of Comparative Examples 1 to 4, the tensile strength in the longitudinal direction and the tensile strength in the transverse direction were measured. As described above, the tensile strength was measured by die-cutting the stacked and integrated sheets into a sample with a sheet width of 5 mm, and pulling the sample at a chuck interval of 30 mm and a test speed of 100 mm/min.

The measurement results are shown in Table III below.

**[Table III]**

| Pore size (*µ*m) | | Membrane strength mN | |
|---|---|---|---|
| | | Longitudinal | Transverse |
| 0.03 | Comparative Example 1 | 12259 | 5737 |
| | Example 1 | 10061 | 8689 |
| 0.05 | Comparative Example 2 | 13377 | 3671 |
| | Example 2 | 7971 | 7219 |
| 0.10 | Comparative Example 3 | 11662 | 3626 |
| | Example 3 | 7056 | 5978 |
| 0.20 | Comparative Example 4 | 9121 | 1756 |
| | Example 4 | 4932.3 | 4965 |

As shown in Table III, in Examples 2 and 4, the longitudinal strength is substantially the same as the transverse strength, and in Example 1, in which there is a difference between the longitudinal strength and the transverse strength, the difference is 1,500 mN or less. In contrast, in each of Comparative Examples 1 to 4, there is a large difference between the tensile strength in the longitudinal direction and the tensile strength in the transverse direction. In Comparative Example 2, the difference is about 10,000 mN. This confirms that in Examples, deformation is unlikely to occur because the tensile strength is isotropic, but in Comparative Examples, deformation is likely to occur.

Figure 3 shows a relationship between the IPA flow rate and the bubble point (BP) in Examples 1 to 4 and Comparative Examples 1 to 4. The balance between the bubble point and the IPA flow rate in Examples 1 to 4 is substantially the same as that in Comparative Examples 1 to 4. This confirms that even when the three-layer membranes of Examples of the present invention are used, the same flow rates as those of the two-layer membranes of Comparative Examples can be secured, and strength and durability can be increased by increasing the number of layers without decreasing the flow rate. Reference Signs List

- 1: porous multi-layer filter
- 2: filtration layer
- 3: protection layer
- 4: support layer

## Claims

1. A porous multi-layer filter, which is a laminated body of three porous stretched PTFE sheets that have been biaxially stretched in the longitudinal and transverse directions, comprising:
a filtration layer as a middle layer; a protection layer stacked on one surface of the filtration layer on the liquid-to-be-treated inflow side; and a support layer stacked on another surface of the filtration layer,
wherein:
the one surface and the other surface of the filtration layer are fusion-bonded to the protection layer and the support layer at boundaries therebetween, pores of the protection layer and pores of the support layer three-dimensionally communicate with pores of the filtration layer, and the mean pore size of pores of the filtration layer is set to be smaller than the mean pore size of pores of each of the protection layer and the support layer;
in the laminated body of three sheets, the difference between the tensile strength in the longitudinal direction and the tensile strength in the transverse direction is 1,500 mN or less, each of the tensile strength in the longitudinal direction and the tensile strength in the transverse direction is in the range of 2,000 to 20,000 mN, and the pressure capacity of the laminated body is 200 to 2,000 kPa;
the mean pore size of the filtration layer is 0.01 to 0.45 µm, and the mean pore size of each of the protection layer and the support layer on both sides is 5 to 1,000 times the mean pore size of the filtration layer;
the porosity of the filtration layer is 40% to 90%, and the porosity of each of the protection layer and the support layer is 1 to 2.5 times that of the filtration layer;
a number-average molecular weight of PTFE unsintered powder forming the filtration layer is 4,000,000 to 15,000,000; and
the thickness of each of the protection layer, the support layer and the filtration layer to constitute the laminated body is in the range of 5 to 60 µm, in the range 5 to 60 µm and in the range 2 to 50 µm respectively, and the total thickness of the laminated body is 10 to 150 µm, and the three sheets have the same thickness, or the protection layer and the support layer have the same thickness and the thickness of each of the protection layer and the support layer is larger than the thickness of the filtration layer.

## Patentansprüche

1. Poröser mehrschichtiger Filter, bei dem es sich um einen laminierten Körper aus drei porösen, gedehnten PTFE-Folien handelt, die biaxial in der Längs- und Querrichtung gedehnt wurden, umfassend:
eine Filterschicht als mittlere Schicht; eine Schutzschicht, die auf eine Seite der Filterschicht auf der Einströmseite der zu behandelnden Flüssigkeit gestapelt ist; und eine Tragschicht, die auf eine andere Seite der Filterschicht gestapelt ist,
wobei:
die eine Seite und die andere Seite der Filterschicht an die Schutzschicht und die Tragschicht an Grenzen dazwischen schmelzgebunden sind, Poren der Schutzschicht und Poren der Tragschicht dreidimensional mit Poren der Filterschicht in Verbindung stehen, und die mittlere Porengröße der Poren der Filterschicht kleiner als die mittlere Porengröße von Poren von jeweils der Schutzschicht und der Tragschicht festgelegt wird;
in dem laminierten Körper aus drei Folien die Differenz zwischen der Zugfestigkeit in der Längsrichtung und der Zugfestigkeit in der Querrichtung 1500 mN oder weniger beträgt, wobei die Zugfestigkeit in der Längsrichtung und die Zugfestigkeit in der Querrichtung jeweils im Bereich von 2000 bis 20.000 mN liegt und die Druckkapazität des laminierten Körpers 200 bis 2.000 kPa beträgt;
die mittlere Porengröße der Filterschicht 0,01 bis 0,45 µm beträgt und die mittlere Porengröße der Schutzschicht und der Tragschicht auf beiden Seiten jeweils 5 bis 1.000 mal die mittlere Porengröße der Filterschicht beträgt;
der Porenanteil der Filterschicht 40 % bis 90 % beträgt und der Porenanteil von jeweils der Schutzschicht und der Tragschicht 1 bis 2,5 mal den der Filterschicht beträgt;
ein Zahlenmittel des Molekulargewichts von ungesintertem PTFE-Pulver, aus dem die Filterschicht besteht, 4.000.000 bis 15.000.000 beträgt; und
die Dicke von jeweils der Schutzschicht, der Tragschicht und der Filterschicht zum Bilden des laminierten Körpers im Bereich von 5 bis 60 µm, im Bereich von 5 bis 60 µm bzw. im Bereich von 2 bis 50 µm liegt, und die Gesamtdicke des laminierten Körpers 10 bis 150 µm beträgt, und die drei Folien dieselbe Dicke aufweisen, oder die Schutzschicht und die Tragschicht dieselbe Dicke aufweisen und die Dicke von jeweils der Schutzschicht und der Tragschicht größer als die Dicke der Filterschicht ist.

## Revendications

1. Filtre multicouche poreux, lequel est un corps stratifié de trois feuilles de PTFE étirées poreuses qui ont été biaxialement étirées dans les directions longitudinale et transversale, comprenant :
une couche de filtration en tant que couche du milieu ; une couche de protection empilée sur une surface de la couche de filtration sur le côté d'entrée du liquide à traiter ; et une couche de support empilée sur une autre surface de la couche de filtration,
où :
la surface et l'autre surface de la couche de filtration sont liées par fusion à la couche de protection et la couche de support aux frontières entre celles-ci, des pores de la couche de protection et des pores de la couche de support communiquent tridimensionnellement avec des pores de la couche de filtration, et la taille moyenne de pore des pores de la couche de filtration est fixée pour être inférieure à la taille moyenne de pore des pores de chacune de la couche de protection et de la couche de support ;
dans le corps stratifié de trois feuilles, la différence entre la résistance à la traction dans la direction longitudinale et la résistance à la traction dans la direction transversale est de 1 500 mN ou inférieure, chacune de la résistance à la traction dans la direction longitudinale et de la résistance à la traction dans la direction transversale se trouve dans l'intervalle de 2 000 à 20 000 mN, et la tenue en pression du corps stratifié est de 200 à 2 000 kPa ;
la taille moyenne de pore de la couche de filtration est de 0,01 à 0,45 µm, et la taille moyenne de pore de chacune de la couche de protection et de la couche de support sur les deux côtés est de 5 à 1 000 fois la taille moyenne de pore de la couche de filtration ;
la porosité de la couche de filtration est de 40 % à 90 %, et la porosité de chacune de la couche de protection et de la couche de support est de 1 à 2,5 fois celle de la couche de filtration ;
une masse moléculaire moyenne en nombre de poudre non frittée de PTFE formant la couche de filtration est de 4 000 000 à 15 000 000 ; et
l'épaisseur de chacune de la couche de protection, la couche de support et la couche de filtration pour constituer le corps stratifié se trouve dans l'intervalle de 5 à 60 µm, dans l'intervalle de 5 à 60 µm et dans l'intervalle de 2 à 50 µm respectivement, et l'épaisseur totale du corps stratifié est de 10 à 150 µm, et les trois feuilles présentent la même épaisseur, ou la couche de protection et la couche de support présentent la même épaisseur et l'épaisseur de chacune de la couche de protection et de la couche de support est supérieure à l'épaisseur de la couche de filtration.
